# FASCICULE DE BREVET EUROPEEN

(11) **EP 3 768 541 B1**
(45) Date de publication et mention de la délivrance du brevet: **22.11.2023**
(21) Numéro de dépôt: 19714712.7
(22) Date de dépôt: 13.03.2019
(51) Int. Cl.: B60K 15/04

(54) **GUIDE DE REMPLISSAGE MODULAIRE POUR RESERVOIR DE CARBURANT DE VEHICULE AUTOMOBILE**
MODULARE EINFÜLLFÜHRUNG FÜR EINEN KRAFTSTOFFTANK EINES KRAFTFAHRZEUGS
MODULAR FILLER GUIDE FOR MOTOR VEHICLE FUEL TANK

(30) Priorité: 22.03.2018 FR 1852472
(43) Date de publication de la demande: 27.01.2021
(73) Titulaire: PSA Automobiles SA, 78300 Poissy (FR)
(72) Inventeur: ERBA, Cedric, 25310 Thulay (FR); DERUELLE, Romain, 25420 Berche (FR)
(86) Numéro de dépôt international: PCT/FR2019/050543
(87) Numéro de publication internationale: WO 2019/180348

(56) Documents cités:
- EP-A1- 2 014 502
- WO-A2-2014/028500
- DE-A1-102010 001 272
- FR-A1- 2 861 655
- FR-A1- 2 935 305
- US-B2- 9 718 348

## Description

L'invention concerne un guide de remplissage modulaire pour réservoir de carburant de véhicule automobile.

Plus particulièrement, l'invention s'intéresse à un guide de remplissage modulaire compatible avec toutes les tubulures de remplissage des réservoirs de carburant des véhicules automobiles.

### ÉTAT DE LA TECHNIQUE ANTÉRIEURE

De manière traditionnelle, le remplissage des réservoirs de carburant est effectué via une tubulure raccordée en partie basse au réservoir et débouchant en partie haute à l'extérieur de la carrosserie. Cette tubulure est pourvue d'une tête destinée à recevoir le pistolet de la pompe et qui est généralement adaptée au type de carburant utilisé.

Chaque type de véhicule possède une tubulure de remplissage spécifique présentant un design adapté aux caractéristiques propres du réservoir et aux contraintes liées à son implantation dans le véhicule.

De telles tubulures de remplissage sont décrites, par exemple, dans les documents DE3019300A1 et DE20011883U1.

Il existe déjà de nombreux moyens destinés à assurer l'accouplement de la tubulure de remplissage à la tête tels que ceux décrits, notamment, dans le EP2759437 qui comprennent des filetages intérieur et extérieur à la tubulure.

Par ailleurs, les têtes de tubulure sont souvent munies d'un guide dit de remplissage permettant de recevoir et de canaliser le jet de carburant sous pression provenant de la pompe.

Ces guides de remplissage sont réalisés, soit par moulage à injection directement avec la tête de tubulure en formant une pièce unique, soit par assemblage ultérieure à la tête de tubulure, comme décrit, par exemple, dans le EP2574485B1.

On connaît encore du document US9718348B2 un guide de remplissage conforme au préambule de la revendication 1.

Toutefois, du fait des particularités d'implantation du réservoir en fonction du véhicule, les têtes de tubulure nécessitent des guides de remplissage qui leur sont spécifiquement adaptés.

En outre, pour un même modèle de véhicule il existe parfois plusieurs guides de remplissages différents en fonction de la motorisation et de la nature des carburants (essence, diesel, ...).

Ainsi, lors de la conception d'un nouveau modèle de véhicule et conjointement aux modifications à apporter alors aux tubulures de remplissage et/ou aux têtes de tubulure, il est nécessaire de réaliser des guides de remplissage adaptés car il n'est pas possible aujourd'hui d'utiliser un guide de remplissage existant sur d'autres tubulures ou d'autres véhicules que ceux pour lesquels il est initialement destiné. Cela implique des mises au point récurrentes et des travaux complexes de révision de cette pièce en vue d'éviter des défauts d'étanchéité ou des risques d'obstruction.

Dans ce contexte, lorsqu'un fournisseur de réservoir obtient la commande pour équiper un modèle de véhicule, il prévoit en général dans son offre, soit la reconduction d'un guide de remplissage existant, soit la fourniture d'un nouveau guide complet. Or, lors du développement d'un nouveau guide, les hypothèses techniques prises pour l'implantation se révèlent souvent erronées et il faut alors systématiquement modifier les guides ou relancer des outillages non prévus à l'origine ce qui engendre des coûts imprévus et non provisionnés dans le projet.

Or, les guides de remplissage sont des pièces coûteuses dont les délais de développement sont relativement longs. De plus, ce guide est un composant critique pour l'utilisateur au regard de la qualité, de la propreté et donc de l'ergonomie des opérations manuelles de remplissage à la pompe.

### EXPOSÉ DE L'INVENTION

La présente invention a pour but de résoudre les problèmes techniques posés par l'art antérieur en proposant un guide de remplissage modulaire susceptible d'être monté sur tous profils et géométries de tubulures et /ou de têtes et donc d'être utilisé avec plusieurs modèles de véhicules et/ou différents types de motorisations.

Ce but est atteint, selon l'invention, au moyen d'un guide de remplissage modulaire pour réservoir de carburant de véhicule automobile comprenant un réceptacle supérieur formant entonnoir et débouchant, en partie haute, dans une tête coiffant une tubulure coudée de raccordement au réservoir et, en partie basse, dans un conduit inférieur destiné à être introduit dans ladite tubulure, ledit réceptacle supérieur et ledit conduit inférieur sont deux pièces distinctes pourvues d'organes d'assemblage mutuel de telle sorte que ledit conduit rapporté présente un profil et une géométrie adaptés à ceux de ladite tubulure, caractérisé en ce que les organes d'assemblage comprennent au moins deux fentes diamétralement opposées ménagées sur le conduit et coopérant par encliquetage avec deux ergots complémentaires portés par la périphérie du réceptacle.

Selon une caractéristique avantageuse, le réceptacle supérieur comprend un manchon de liaison étanche avec le conduit inférieur.

Selon une autre caractéristique, le conduit présente une longueur et un rayon de courbure adaptés au coude de la tubulure de façon à orienter axialement le flux de carburant s'échappant du réceptacle vers le réservoir.

Selon une variante spécifique destinée aux véhicules à motorisation diesel, le réceptacle supérieur comprend un détrompeur mécanique bloquant l'introduction d'un pistolet de pompe à essence.

Selon encore une autre variante, le réceptacle supérieur comprend un système ORVR.

Selon un mode de réalisation préférentiel, la disposition inverse des organes d'assemblage est possible sans sortir du cadre de l'invention.

Selon un premier mode de réalisation, le réceptacle est réalisé par moulage à injection d'une seule pièce avec la tête de tubulure, les deux pièces étant alors en matière plastique.

Selon un autre mode de réalisation, le réceptacle est emboîté et fixé à l'intérieur de la tête. Ce mode s'applique, notamment, lorsque la tête est en métal.

L'invention permet de simplifier la conception et le développement des guides de remplissage en proposant un guide modulaire en deux parties distinctes dont la partie supérieure formant le réceptacle est compatible avec la plupart des têtes de tubulure et la partie inférieure formant le conduit d'alimentation est choisie et réalisée en fonction du profil et de la géométrie de la tubulure à laquelle elle est destinée.

La conception du réceptacle supérieur a été effectuée dans la perspective d'éviter ou de limiter les modifications de cette pièce à chaque futur lancement d'un nouveau véhicule, d'une nouvelle tubulure ou d'une nouvelle tête. Aussi, sa symétrie de révolution et son caractère axial et rectiligne lui permettent d'être monté rapidement et avec des outils simples (en comparaison des guides monobloc existants qui présentent des formes complexes). Ainsi, l'invention permet de réduire le nombre d'outillages à lancer en fabrication.

De plus, le conduit inférieur peut être réalisé avec un prototypage rapide et aisé ce qui offre un gain de temps significatif pour la mise au point de la fonction remplissage du réservoir du véhicule. En effet, il devient possible de lancer plusieurs versions de conduits pour les tester sur une même tubulure et ainsi, par des essais physiques, notamment, chez le fournisseur, de déterminer quel est le design et/ou la géométrie optimal pour remplir le cahier des charges préalablement défini.

La fonction de remplissage du réservoir en carburant étant un aspect sensible du développement d'un véhicule, la notion de risque qualité est limitée avec le perfectionnement de l'invention du fait d'une grande réactivité dans la mise au point.

Enfin, l'invention en proposant un guide modulaire en deux parties dont l'une, le réceptacle supérieur, devient standard et commun à toutes les tubulures, apporte un avantage économique substantiel du fait que seul le conduit inférieur dont le prix de revient est faible nécessite un mode de réalisation spécifique.

### BRÈVE DESCRIPTION DES FIGURES

D'autres caractéristiques et avantages de l'invention ressortiront à la lecture de la description qui va suivre, en référence aux figures annexées et détaillées ci-après.
Les figures 1A et 1B représentent des vues de face d'un mode de réalisation du guide de remplissage selon l'invention, respectivement, à l'état libre et en position de montage dans une tubulure de réservoir.
Les figures 2A, 2B, 2C et 2D représentent des vues de face de variantes du guide de l'invention implantés, respectivement, sur quatre tubulures différentes.
Pour plus de clarté, les éléments identiques ou similaires sont repérés par des signes de référence identiques sur l'ensemble des figures.

### DESCRIPTION DÉTAILLÉE DE MODES DE REALISATION

Naturellement, les modes de réalisation illustrés par les figures présentées ci-dessus et décrits ci-après ne sont donnés qu'à titre d'exemples non limitatif. Il est explicitement prévu que l'on puisse combiner entre eux ces différents modes pour en proposer d'autres.

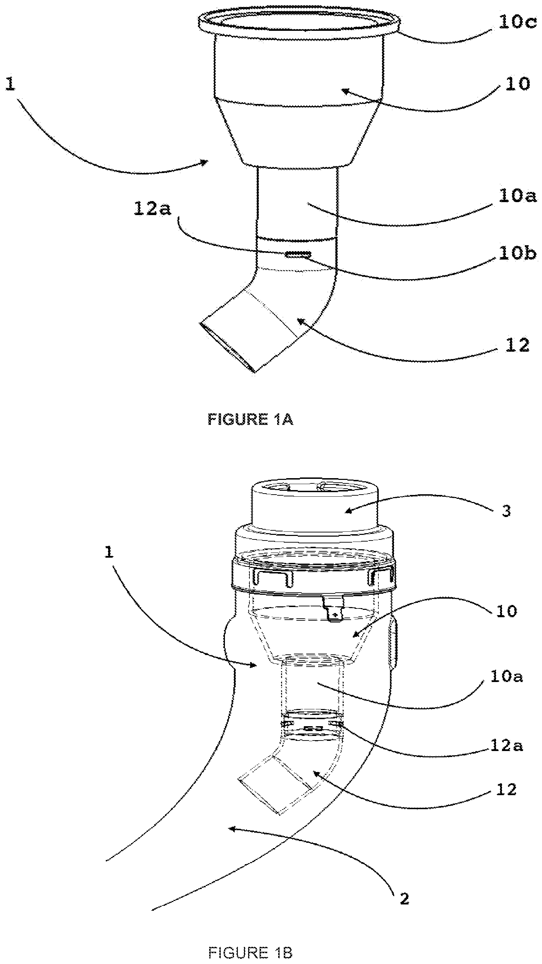

La figure 1A représente un mode de réalisation du guide 1 dit de remplissage de l'invention. Ce guide 1 est destiné à être intégré dans une tubulure coudée 2 assurant le raccordement au réservoir de carburant (non représenté) en étant coiffée par une tête 3 (figure 1B) qui affleure généralement la carrosserie du véhicule et qui est pourvue d'un bouchon d'obturation étanche (non représenté).

Le guide 1 comprend, de manière traditionnelle, un réceptacle supérieur 10 qui débouche, en partie haute, dans la tête 3 et, en partie basse, dans un conduit inférieur 12 destiné à être introduit dans la tubulure 2 de remplissage, comme illustré notamment, par la figure 1B.

Le réceptacle 10 forme un entonnoir pour le carburant liquide qui est injecté sous pression dans la tubulure 2 au moyen d'un pistolet (non représenté) manipulé par un utilisateur et dont l'extrémité est introduite dans la tête 3. Ce pistolet est alimenté en carburant liquide sous pression par une pompe disposée dans une station de ravitaillement en carburant.

Selon l'invention, le réceptacle supérieur 10 et ledit conduit inférieur 12 sont réalisés sous forme de deux pièces distinctes susceptibles d'être assemblées l'une à l'autre au moyen d'organes d'assemblage. La liaison entre le réceptacle 10 et le conduit 12 est éventuellement amovible afin d'obtenir un conduit interchangeable.

Cette disposition est motivée par le fait que le mode d'implantation du réservoir diffère d'un modèle de véhicule à l'autre et que, dans ces conditions, les tubulures changent alors nécessairement en profil et géométries. Or, ce changement impose aussi des modifications des caractéristiques du guide de remplissage en vue de pouvoir l'intégrer de façon optimale dans chaque type de tubulure.

L'invention prévoit donc de réaliser le conduit 12 rapporté de façon à ce qu'il présente un profil et une géométrie adaptés à ceux de la tubulure 2 sans qu'il soit nécessaire de modifier le réceptacle 10 qui peut devenir standard et commun à la plupart des véhicules.

Dans ce but, le conduit 12 présente une longueur et un rayon de courbure adaptés au coude de la tubulure 2 de façon à orienter axialement le flux de carburant s'échappant du réceptacle 10 vers le réservoir et à éviter un éventuel reflux.

De manière générale, la longueur du conduit 12 et son rayon de courbure sont déterminés au préalable en vue d'être compatibles avec la tubulure à laquelle le guide est destiné. Le diamètre extérieur du conduit 12 est inférieur au diamètre intérieur de la tubulure de façon à ménager un espace intercalaire suffisant entre les deux pièces permettant un montage facile et rapide du guide.

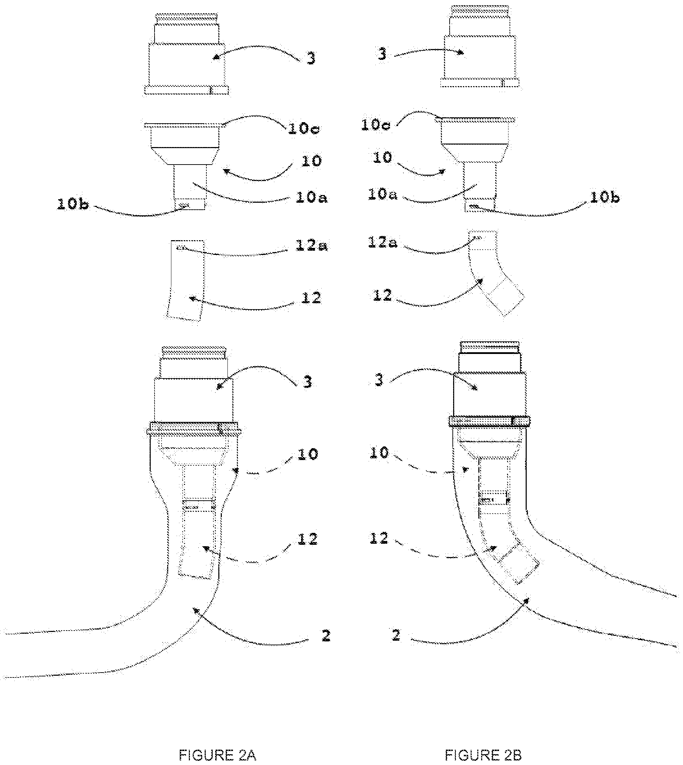

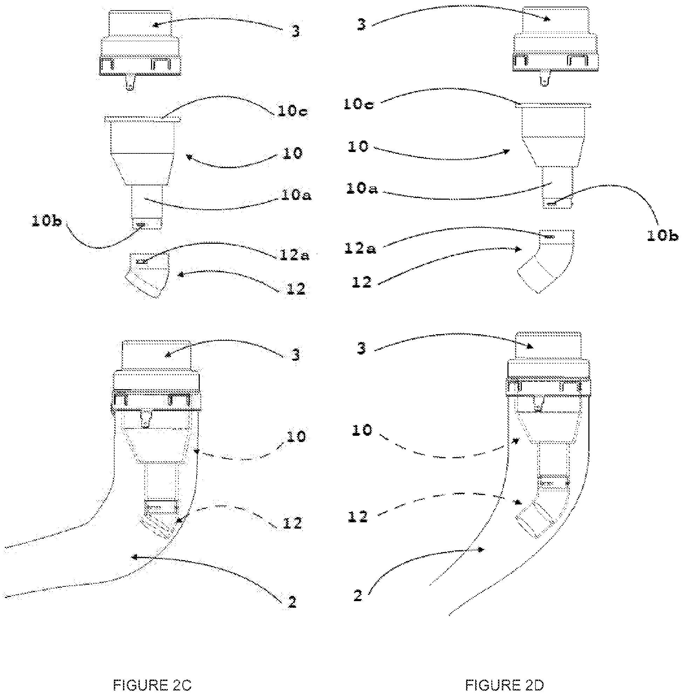

Dans les figures 1A et 2A à 2D, Le réceptacle 10 a un profil globalement cylindro-conique délimité à son extrémité supérieure par un rebord plat 10c en saillie radiale formant bride et comprend un manchon 10a s'étendant vers le bas en assurant la liaison étanche avec le conduit inférieur 12.

Les organes d'assemblage comprennent au moins deux fentes 12a diamétralement opposées ménagées sur le conduit 12 et coopérant par encliquetage avec au moins deux ergots complémentaires 10b portés par la périphérie du réceptacle 10 et, de préférence, par le manchon 10a. La configuration inverse est aussi possible.

Selon une variante spécifique destinée aux véhicules à motorisation diesel, le réceptacle supérieur 10 sera pourvu d'un détrompeur mécanique (non représenté) bloquant l'introduction d'un pistolet de pompe à essence.

Selon une autre variante plus particulièrement destinée à des véhicules à motorisation essence, le réceptacle supérieur 10 sera équipé d'un volet destiné à limiter le versement d'un volume déterminé de carburant donné.

Selon encore une autre variante, le réceptacle supérieur comprend un système ORVR.

Le réceptacle 10 est réalisé en matière plastique par moulage à injection d'une seule pièce avec la tête de tubulure 3 ou emboîté et fixé de manière étanche à l'intérieur de la tête si celle-ci est réalisée en métal.

## Revendications

1. Guide (1) de remplissage modulaire pour réservoir de carburant de véhicule automobile comprenant un réceptacle supérieur (10) formant entonnoir et débouchant, en partie haute, dans une tête (3) coiffant une tubulure coudée (2) de raccordement au réservoir et, en partie basse, dans un conduit inférieur (12) destiné à être introduit dans ladite tubulure (2), ledit réceptacle supérieur (10) et ledit conduit inférieur (12) sont deux pièces distinctes pourvues d'organes d'assemblage mutuel de telle sorte que ledit conduit (12) rapporté présente un profil et une géométrie adaptés à ceux de ladite tubulure (2), **caractérisé en ce que** lesdits organes d'assemblage comprennent au moins deux fentes (12a) diamétralement opposées ménagées sur ledit conduit (12) et coopérant par encliquetage avec deux ergots complémentaires (10b) portés par la périphérie dudit réceptacle (12).

2. Guide de remplissage selon la revendication 1, **caractérisé en ce que** ledit réceptacle supérieur (10) comprend un manchon (10a) de liaison étanche avec ledit conduit inférieur (12).

3. Guide de remplissage selon l'une des revendications précédentes, **caractérisé en ce que** ledit conduit (12) présente une longueur et un rayon de courbure adaptés au coude de la tubulure (2) de façon à orienter axialement le flux de carburant s'échappant du réceptacle (10) vers le réservoir.

4. Guide de remplissage selon l'une des revendications précédentes, **caractérisé en ce que** ledit réceptacle supérieur (10) comprend un détrompeur mécanique bloquant l'introduction d'un pistolet de pompe à essence.

5. Guide de remplissage selon l'une des revendications précédentes, **caractérisé en ce que** ledit réceptacle (10) est réalisé par moulage à injection d'une seule pièce avec ladite tête (3) de tubulure.

6. Guide de remplissage selon l'une des revendications 1 à 4, **caractérisé en ce que** ledit réceptacle (10) est emboîté et fixé à l'intérieur de ladite tête (3).

## Patentansprüche

1. Modulare Einfüllführung (1) für den Kraftstofftank eines Kraftfahrzeugs, bestehend aus einem oberen Behälter (10), der einen Trichter bildet und im oberen Teil in einen Kopf (3) mündet, der ein Rohrkrümmer (2) für den Anschluss an den Tank und unten abdeckt Teil eines unteren Kanals (12), der in das Rohr (2) eingeführt werden soll, wobei der obere Behälter (10) und der untere Kanal (12) zwei separate Teile sind, die mit gegenseitigen Montageelementen versehen sind, so dass der zusätzliche Kanal (12) hat ein Profil und eine Geometrie, die denen des Rohrs (2) angepasst sind, **dadurch gekennzeichnet, dass** die Montageelemente mindestens zwei diametral gegenüberliegende Schlitze (12a) umfassen, die auf dem Kanal (12) vorgesehen sind und durch Einrasten mit zwei komplementären Laschen (10b) zusammenwirken. von der Peripherie des Behälters (12) getragen.

2. Füllführung nach Anspruch 1, **dadurch gekennzeichnet, dass** der obere Behälter (10) eine Hülse (10a) zur dichten Verbindung mit der unteren Leitung (12) aufweist.

3. Einfüllführung nach einem der vorhergehenden Ansprüche, **dadurch gekennzeichnet, dass** die Leitung (12) eine Länge und einen Krümmungsradius aufweist, die an den Bogen des Rohrs (2) angepasst sind, um den aus dem Behälter austretenden Kraftstoffstrom axial auszurichten (10) zum Tank.

4. Einfüllhilfe nach einem der vorhergehenden Ansprüche, **dadurch gekennzeichnet, dass** der obere Behälter (10) eine mechanische, betriebssichere Vorrichtung aufweist, die das Einführen einer Zapfpistole blockiert.

5. Einfüllstutzen nach einem der vorhergehenden Ansprüche, **dadurch gekennzeichnet, dass** der Behälter (10) im Spritzgussverfahren einstückig mit dem Schlauchkopf (3) hergestellt ist.

6. Einfüllhilfe nach einem der Ansprüche 1 bis 4, **dadurch gekennzeichnet, dass** der Behälter (10) in den Kopf (3) eingesetzt und befestigt ist.

## Claims

1. Modular filling guide (1) for motor vehicle fuel tank comprising an upper receptacle (10) forming a funnel and opening, in the upper part, into a head (3) covering an elbow pipe (2) for connection to the tank and, lower part, in a lower duct (12) intended to be introduced into said tubing (2), said upper receptacle (10) and said lower duct (12) are two separate parts provided with mutual assembly members such that said added duct (12) has a profile and a geometry adapted to those of said pipe (2), **characterized in that** said assembly members comprise at least two diametrically opposed slots (12a) provided on said duct (12) and cooperating by snapping with two complementary lugs (10b) carried by the periphery of said receptacle (12).

2. Filling guide according to Claim 1, **characterized in that** the said upper receptacle (10) comprises a sleeve (10a) for leaktight connection with the said lower duct (12).

3. Filling guide according to one of the preceding claims, **characterized in that** the said conduit (12) has a length and a radius of curvature adapted to the elbow of the pipe (2) so as to axially orient the flow of fuel escaping from the receptacle (10) to the reservoir.

4. Filling guide according to one of the preceding claims, **characterized in that** the said upper receptacle (10) comprises a mechanical foolproof device blocking the introduction of a petrol pump nozzle.

5. Filling guide according to one of the preceding claims, **characterized in that** the said receptacle (10) is produced by injection molding in one piece with the said head (3) of tubing.

6. Filling guide according to one of Claims 1 to 4, **characterized in that** the said receptacle (10) is nested and fixed inside the said head (3).
